# EUROPEAN PATENT APPLICATION

(11) **EP 4 585 572 A1**
(43) Date of publication of application: **16.07.2025**
(21) Application number: 24201370.4
(22) Date of filing: 19.09.2024
(51) Int. Cl.: C02F 3/10, C02F 3/08

(54) **SUSPENDED CARRIER FOR RAPID FLUIDIZATION AND STABLE BIOFILM NITRIFICATION/DENITRIFICATION**

(30) Priority: 11.01.2024 CN 202410050075
(71) Applicant: Hangzhou Tao of Water Technology Co., Ltd., Zhejiang, Hangzhou 310000 (CN)
(72) Inventor: FANG, Yong, Zhejiang, 310000 (CN)
(74) Representative: Bryn Aarflot AS

(57) **Abstract**

The present invention relates to a suspended carrier for rapid fluidization and stable biofilm nitrification/denitrification. The structural composition of the suspended carrier includes wave-surface-shaped frameworks, and two adjacent rows of wave-surface-shaped frameworks are in mirror symmetry with each other and are arranged in a staggered manner. The growth thickness of the biofilm regulated by suspended carrier in the present invention is controlled within an effective range so as to maintain the biofilm activity. The results of continuously removing ammonia nitrogen show that, after varying stages of substrate loading impacts, the removal rate of ammonia nitrogen remains stable at over 95%. This ensures the operational stability of the biofilm system.

## Description

### TECHNICAL FIELD

The present invention relates to the technical field of wastewater treatment, and particularly to a suspended carrier for rapid fluidization and stable biofilm nitrification/denitrification.

### BACKGROUND ART

Globally, sewage (wastewater) is mainly treated and recycled through a combination of physicochemical and biological methods. In the biological phase, nearly a hundred processes or reactors have been developed, whose objective is to enhance the ability of microorganisms to remove pollutants from wastewater. Based on the existential state of microorganisms in the bioreactors, biological treatment for wastewater can be divided into two major categories: the conventional activated sludge (CAS) and the biofilm process. In the CAS system, microorganisms are in a completely mixed and suspended in the wastewater. The municipal wastewater treatment plants employed CAS mainly maintains the microbial concentration through sludge recirculation, to achieve effective removal of pollutants. In the biofilm process, microorganisms normally attached to the surface of media or carriers, thus forming a biofilm. Compared to the CAS system, the biofilm process is characterized by separating the retention time of microorganisms and wastewater. Microorganisms can be effectively enriched on the surface of carriers that were retained in the reactor by means of carrier interception. The ability of biofilm for pollutants removal is significantly improved. The application advantages of the biofilm technology include high impact loads, high biological treatment efficiency, small space occupation, low sludge production, and convenient operation and management.

There are two applications of the biofilm method: fluidized bed and fixed bed. The fixed bed biofilm process often encounters risks of film bed clogging and forming dead zones, thus leading to insufficient contact between pollutants in the wastewater and the biofilm on the fixed bed. The fluidized bed biofilm process eliminates these risks, wherein the fluidized bed biofilm process represented by moving bed biofilm reactor (MBBR) is the most widely applied. MBBR application includes adding suspended carriers with a density close to the wastewater for the attachment and growth of microorganisms, and achieving fluidization of the suspended carriers and sufficient contact with the wastewater to be treated through aeration or flow pushing, where biofilms enriched and grown on the surface of the suspended carriers adsorb and degrade pollutants in the wastewater, thus resulting in efficient purification of the wastewater.

The known developed MBBR suspended carriers are classified into two major categories: flexible (foamed) and rigid (injection molded or extruded). Currently, the performance evaluation of suspended carriers for biofilm formation is based on the protected surface area available for microbial growth. The protected surface area refers to the regions (area) of the carrier that are protected from external collision and shear.

Flexible suspended carriers characterized by block sponges have a large protected surface area available for microbial growth. This is because the sponge structure can allow a large number of microorganisms to accumulate inside. However, microorganisms accumulated inside the sponge become dead zones of the carrier, which prevents biofilm replace. At the same time, the flexible sponge structure suffers severe wear from long-term collision and shear in the system. As usage time increases, the performance and functionality of these carriers degrade rapidly.

Rigid suspended carriers characterized by tubular shape or cylindrical shape are currently the most widely used carriers in the industry. However, the drawback of rigid carriers is the small protected area. Additionally, with the impact of influent wastewater loading, the protected areas of the carriers often become clogged. This clogging problem is similar to the problem of easily forming a dead zone in the flexible carriers. In other words, effective replace of biofilms cannot be achieved. Another common problem with rigid carriers is the too-long time required for fluidization with wastewater during the system start-up stage, typically needing 7-15 days or even longer. This significantly reduces the speed of the carriers for biofilm formation and increases the start-up time of a reactor.

In all application cases of MBBR suspended carriers, it is known that the common problem is to allow uncontrolled growth of biofilms within the protected surface area designed in the carriers. This causes the actual efficiency of the suspended carriers always less or far less than the designed values. Since fluctuations in influent of the wastewater often occur, the biofilm in the carrier protected surface areas often experiences overgrowth due to higher loading impacts. This leads to carrier clogging and the formation of dead zones, which significantly reduces the carrier efficiency for oxygen transfer and/or mass transfer. Therefore, the operational stability of the MBBR system cannot be well maintained.

### SUMMARY

The present invention provides a suspended carrier, wherein the structural composition of the suspended carrier includes wave-surface-shaped frameworks, and two adjacent rows of wave-surface-shaped frameworks are in mirror symmetry with each other and are arranged in a staggered manner.

### BRIEF DESCRIPTION OF DRAWINGS

Referring to the drawings, the advantages, features, value, and realized effects of the present invention can be significantly demonstrated through the description of the embodiments, wherein
FIG. 1 is a schematic diagram of a hexagonal suspended carrier of Example 1 of the present invention;
FIG. 2 is a schematic diagram of a wave-surface-shaped framework of the present invention;
FIG. 3 is a schematic diagram of a structure connecting adjacent wave-surface-shaped frameworks and a partition ribbed plate in Example 1 of the present invention;
FIG. 4 is a schematic diagram of a structure connecting the adjacent wave-surface-shaped frameworks through connection points in Example 2 of the present invention;
FIG. 5 is a schematic diagram of a non-planar hexagonal suspended carrier with notches of Example 3 of the present invention;
FIG. 6 is a schematic diagram of a saddle-shaped suspended carrier of Example 4 of the present invention;

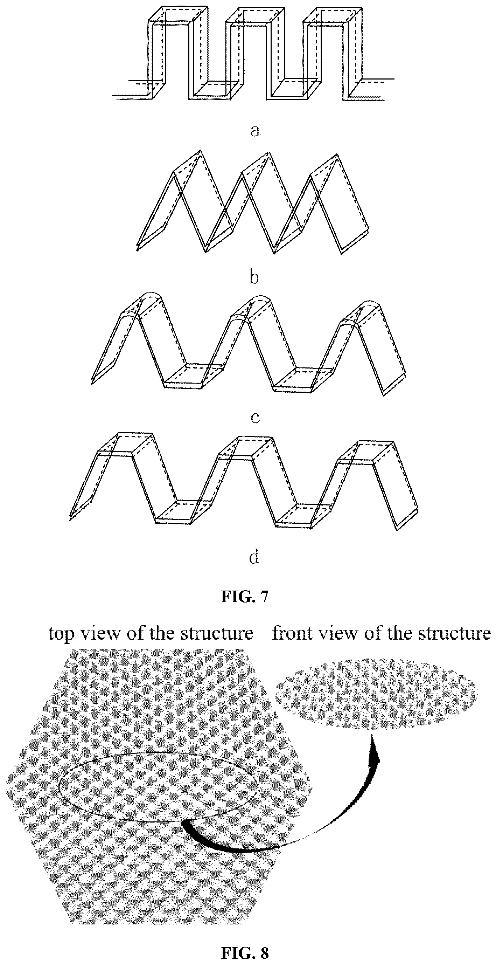

FIG. 7 is a schematic diagram of different wave-surface-shaped framework structures, a is a square wave, b is a triangular wave, c is a combination of half wave and trapezoidal wave, and d is a trapezoidal wave; and
FIG. 8 is a schematic structural diagram of a wave-surface-shaped framework of a honeycomb wave structure.

Reference numerals: 1- thickness of framework wave surface; 2- recessed region; 3-maximum depth of recess; 4- partition ribbed plate; 5- width of framework wave surface; 6-maximum opening width of recess; 7- contact point of adjacent frameworks; 8- thickness of suspended carrier.

### DETAILED DESCRIPTION OF EMBODIMENTS

The present invention is further described in detail through specific embodiments, but it is not limited to the specific examples provided below. The present invention is defined by the ideas expressed in the appended claims. Additionally, various substitutions or modifications made through general technical knowledge should also be included within the scope of the present invention, except for the specific embodiments detailed below.

Unless otherwise defined, all technical and scientific terms used herein have the same meaning as understood by those skilled in the art of the relevant technical field. The terms used in the summary of the present invention are used for the purpose of describing specific embodiments and are not intended to limit the present invention. The terms "comprise" and "provide" and their variations, as well as any other variations, are intended to cover non-exclusive inclusion in the summary and the claims of the present invention, as well as in the drawings.

The term "embodiment" used in the present invention means that specific features, structures, or characteristics described in conjunction with the embodiments can be included in at least one embodiment of the present invention. The use of this phrase in various parts of the summary does not necessarily refer to the same embodiment, nor does it imply that these embodiments are mutually exclusive or independent of each other. Without conflict, the technical solutions in the embodiments disclosed in the present invention may be combined or replaced with each other.

According to the introduction from the background technology, the growth control and dynamic renewal of biofilm are crucial for the stable performance of suspended carriers. To address the problem of prolonged fluidization time during the start-up stage and uncontrolled biofilm growth leading to poor operational stability of the biochemical system in existing MBBR suspended carriers, the present invention provides a suspended carrier that can rapidly fluidize (i.e., increase the fluidization speed of the suspended carrier), improve ammonia nitrogen conversion load, and control biofilm growth.

In order to achieve the above objective, the technical solution of the present invention is as follows.

The present invention provides a suspended carrier, wherein the structural composition of the suspended carrier includes wave-surface-shaped frameworks, and two adjacent rows of wave-surface-shaped frameworks are in mirror symmetry with each other and are arranged in a staggered manner.

In one or more embodiments, the two adjacent rows of frameworks are connected by a contact point of an adjacent wave-surface-shaped framework, wherein a recessed region of a wave surface serves as a biofilm growth region.

In one or more embodiments, the structural composition of the suspended carrier further includes a partition ribbed plate, wherein the two adjacent rows of wave-surface-shaped frameworks are connected by the partition ribbed plate. A chamber enclosed by the wave-surface-shaped frameworks and the partition ribbed plate serves as the biofilm growth region.

In one or more embodiments, the structural composition of the suspended carrier further includes a partition ribbed plate, wherein along the width direction, the left and right sides of the wave-surface-shaped framework are provided with the partition ribbed plate, respectively. The two adjacent rows of wave-surface-shaped frameworks are connected by the partition ribbed plate. The chamber enclosed by the wave-surface-shaped frameworks and the partition ribbed plate serves as the biofilm growth region.

In one or more embodiments, the wave-surface-shaped framework includes multiple crest regions arranged at intervals and trough regions arranged at intervals, wherein the crest regions and trough regions are alternately arranged.

In one or more embodiments, two adjacent crest regions and a trough region arranged between them form a recessed region, and two adjacent trough regions and a crest region arranged between them also form a recessed region.

In one or more embodiments, the trough region is located at a centerline of a line connecting the left and right crest regions, and the crest region is located at a centerline of a line connecting the left and right trough regions.

In one or more embodiments, the crest regions of any two adjacent rows of wave-surface-shaped frameworks are arranged in a staggered manner, and the trough regions of any two adjacent rows of wave-surface-shaped frameworks are arranged in a staggered manner.

In one or more embodiments, the crest regions of one wave-surface-shaped framework in any two adjacent rows of wave-surface-shaped frameworks are arranged opposite to the trough regions of the other wave-surface-shaped framework, and the trough regions of one wave-surface-shaped framework are arranged opposite to the crest regions of the other wave-surface-shaped framework. In one or more embodiments, the crest regions of one wave-surface-shaped framework in any two adjacent rows of wave-surface-shaped frameworks are located at a midpoint position of the line connecting the left and right crest regions of trough regions of the other wave-surface-shaped framework arranged opposite to the crest regions. The trough regions of one wave-surface-shaped framework in any two adjacent rows of wave-surface-shaped frameworks are also located at a midpoint position of a line connecting the left and right trough regions of crest regions of the other wave-surface-shaped framework arranged opposite to the trough regions. In one or more embodiments, the contact point of the framework is located at any position on the line connecting the adjacent crest region and trough region.

In one or more embodiments, the contact point of the framework is located at a centerline of the line connecting the adjacent crest region and trough region.

In one or more embodiments, the structure of the wave-surface-shaped framework of the suspended carrier includes one or a combination of more of pure sinusoidal waves, sinusoidal waves, square waves, triangular waves, half waves, trapezoidal waves, or honeycomb waves.

In one or more embodiments, the thickness of the suspended carrier is 0.1-7.0 mm, and more preferably 0.15-3.5 mm.

In the embodiment, the thickness of the suspended carrier can be, for example, 0.1 mm, 0.15 mm, 0.2 mm, 0.25 mm, 0.3 mm, 0.35 mm, 0.4 mm, 0.45 mm, 0.5 mm, 0.6 mm, 0.7 mm, 0.8 mm, 0.9 mm, 1.0 mm, 1.2 mm, 1.5 mm, 1.8 mm, 2.0 mm, 2.5 mm, 2.8 mm, 3.0 mm, 3.3 mm, 3.5 mm, 4.0 mm, 4.2 mm, 4.5 mm, 5.0 mm, 5.5 mm, 6.0 mm, 6.4 mm, 6.5 mm, 6.7 mm, 7.0 mm, or any value between 0.1 mm and 7.0 mm.

In one or more embodiments, the thickness of the partition ribbed plate is ≤ 1.0 mm, and more preferably ≤0.4 mm.

In the embodiment, the thickness of the partition ribbed plate can be, for example, 0.1 mm, 0.15 mm, 0.2 mm, 0.25 mm, 0.3 mm, 0.35 mm, 0.4 mm, 0.5 mm, 0.6 mm, 0.7 mm, 0.8 mm, 0.9 mm, 1.0 mm, or any value greater than 0 and less than or equal to 1.0 mm.

In one or more embodiments, the thickness of the wave surface of the wave-surface-shaped framework is 0.05-2.0 mm, and more preferably 0.1-0.5 mm.

In the embodiment, the thickness of the wave surface of the wave-surface-shaped framework can be, for example, 0.05 mm, 0.1 mm, 0.13 mm, 0.15 mm, 0.17 mm, 0.2 mm, 0.22 mm, 0.25 mm, 0.27 mm, 0.3 mm, 0.33 mm, 0.35 mm, 0.4 mm, 0.45 mm, 0.48 mm, 0.5 mm, 1.0 mm, 1.5 mm, 2.0 mm, or any value between 0.05 mm and 2.0 mm.

In one or more embodiments, the width of the wave surface of the wave-surface-shaped framework is 0.05-50 mm, more preferably 0.2-30 mm, and most preferably 0.5-2.0 mm.

In the embodiment, the width of the wave surface of the wave-surface-shaped framework can be, for example, 0.05 mm, 0.1 mm, 0.2 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm, 2.0 mm, 5.0 mm, 10 mm, 15 mm, 20 mm, 25 mm, 30 mm, 40 mm, 50 mm, or any value between 0.05 mm and 50 mm.

In one or more embodiments, the maximum depth of the recessed region is 0.05-5.0 mm, more preferably 0.1-1.5 mm, and most preferably 0.5-1.0 mm. The effective performance and stable maintenance of the biofilm depend on the effective dynamic renewal and growth thickness control of the biofilm, and the maximum depth of the chamber or recessed region determines the maximum thickness of the growth of the biofilm.

In the embodiment, the maximum depth of the recessed region can be, for example, 0.05 mm, 0.1 mm, 0.2 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm, 2.0 mm, 2.5 mm, 3.0 mm, 3.5 mm, 4.0 mm, 4.5 mm, 5.0 mm, or any value between 0.05 mm and 5.0 mm.

In one or more embodiments, the ratio of the maximum depth to the maximum opening width of the recessed region is 5:1 to 1:10, which enables the suspended carrier to achieve carrier fluidization with no less than 50% of the reactor filling rate within 24 hours, more preferably 3:1 to 1:5, and most preferably 2:1 to 1:2, which enables the suspended carrier to achieve carrier fluidization with no less than 50% of the reactor filling rate within 4 hours.

In the embodiment, the suspended carrier provided by the present invention can achieve carrier fluidization with more than 50% of the reactor filling rate within 24 hours. The rapid fluidization of the suspended carrier provides more opportunities for the attachment and biofilm formation of microorganisms in the start-up stage, which will shorten the start-up time of the reactor.

In the embodiment, when the ratio of the maximum depth to the maximum opening width of the recessed region is any value between 5:1 and 1:10, the suspended carrier can achieve carrier fluidization with no less than 50% of the reactor filling rate within 24 hours.

In the embodiment, when the ratio of the maximum depth to the maximum opening width of the recessed region is any value between 3:1 and 1:5, the suspended carrier can achieve carrier fluidization with no less than 50% of the reactor filling rate within 4 hours.

In one or more embodiments, the shape of the suspended carrier includes, but is not limited to, saddle-shape, C-shape, S-shape, hexagonal shape, circular shape, rectangular shape, or non-planar shapes with notches, and more preferably circular shape, hexagonal shape, saddle-shape, S-shape, or non-planar shapes with notches, so as to reduce the energy consumption of aeration fluidization, and prevent wall adhesion during fluidization and adhesion or stacking between carriers.

The beneficial effects of the present invention are as follows.

In addressing the problem of prolonged fluidization time in the start-up stage and uncontrolled biofilm growth during the operation of the known MBBR suspended carriers, the present invention develops a suspended carrier for rapid fluidization and stable biofilm formation. The suspended carrier can achieve carrier fluidization with more than 50% of the reactor filling rate within 24 hours, whereas traditional MBBR suspended carriers typically require 7-15 days or even longer. In response to different substrate loading impacts, the growth thickness of the biofilm of the suspended carrier in the present invention is controlled within an effective range, so as to maintain the biofilm activity. The results of continuously removing ammonia nitrogen show that, after varying stages of substrate loading impacts, the removal rate of ammonia nitrogen remains stable at over 95%, whereas traditional carriers often experience clogging, which leads to a significant decline in the conversion load of ammonia nitrogen. This ensures the operational stability of the biochemical system.

Specifically, the embodiments of the present invention are described in further detail by the following examples.

### Example 1

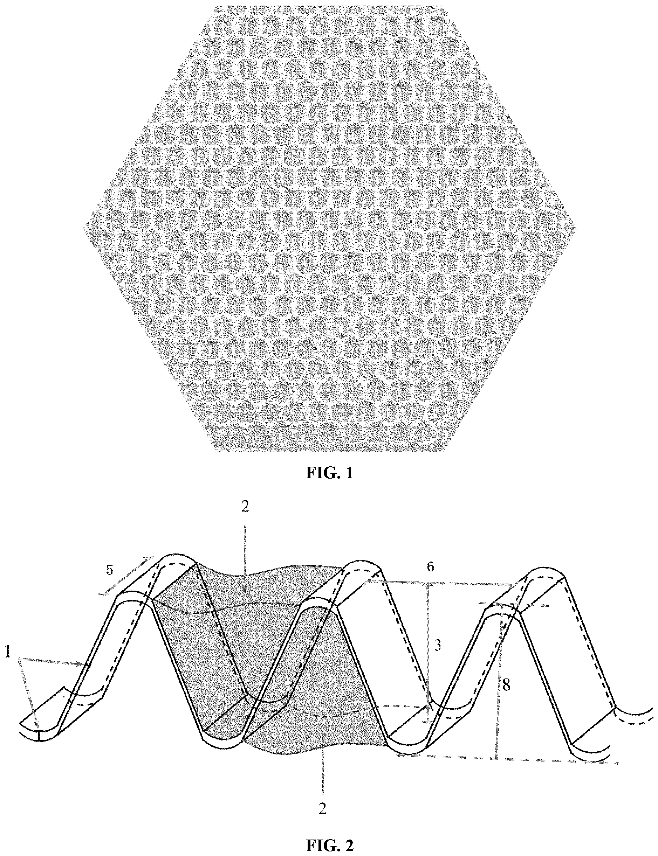

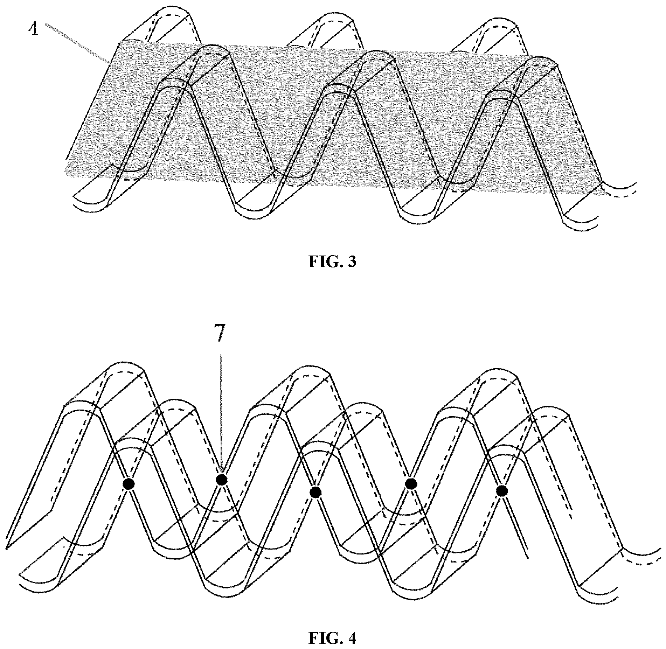

Example 1 of the present invention is illustrated by FIGS. 1, 2, and 3, wherein FIG. 1 is a schematic diagram of a hexagonal suspended carrier, FIG. 2 is a schematic diagram of a wave-surface-shaped framework of the present invention, and FIG. 3 is a schematic diagram of a structure connecting adjacent wave-surface-shaped frameworks and a partition ribbed plate in the examples of the present invention.

With reference to FIG. 2, the wave-surface-shaped framework as shown in FIG. 2 includes multiple crest regions arranged at intervals and multiple trough regions arranged at intervals, wherein the crest regions and trough regions are alternately arranged. In other words, a trough region is arranged between two crest regions, and a crest region is arranged between two trough regions. Two adjacent crest regions and a trough region arranged between them form a recessed region 2, and two adjacent trough regions and a crest region arranged between them also form a recessed region 2. These recessed regions 2 are regions in which liquid is temporarily stored during the initial use of the carrier and biofilm growth is controlled in later stages. In one or more embodiments, the trough region is located at a centerline of a line connecting the left and right crest regions, and the crest region is located at a centerline of a line connecting the left and right trough regions.

In FIG. 3, the partition ribbed plate 4 is arranged on the left and right sides of the wave-surface-shaped framework along the width direction, which connects two adjacent rows of wave-surface-shaped frameworks that are in mirror symmetry with each other and in staggered arrangement, and forms independent and repetitive chambers. Thus, the overall structure of the suspended carrier is formed.

Referring to FIG. 3, any two adjacent rows of wave-surface-shaped frameworks in FIG. 3 are in mirror symmetry with each other and are arranged in a staggered manner. In the embodiment, the crest regions of any two adjacent rows of wave-surface-shaped frameworks are arranged in a staggered manner, and the trough regions of any two adjacent rows of wave-surface-shaped frameworks are arranged in a staggered manner. In one or more embodiments, the crest regions of one wave-surface-shaped framework in any two adjacent rows of wave-surface-shaped frameworks are arranged opposite to the trough regions of the other wave-surface-shaped framework, and the trough regions of one wave-surface-shaped framework are arranged opposite to the crest regions of the other wave-surface-shaped framework. In one or more embodiments, a crest region of one wave-surface-shaped framework in any two adjacent rows of wave-surface-shaped frameworks is located at a centerline position of the line connecting the left and right crest regions of a trough region of the other wave-surface-shaped framework arranged opposite to the crest region. A trough region of one wave-surface-shaped framework in any two adjacent rows of wave-surface-shaped frameworks is also located at a centerline position of a line connecting the left and right trough regions of a crest region of the other wave-surface-shaped framework arranged opposite to the trough region.

The staggered arrangement of any two adjacent rows of wave-surface-shaped frameworks ensures the stability of the overall structure of the suspended carrier. The partition ribbed plate separates the internal channels of the wave-surface-shaped framework so as to form independent chambers, wherein the chambers are regions in which liquid is temporarily stored during the initial use of the carrier, and biofilm growth is controlled in later stages.

Both sides of any wave-surface-shaped framework and partition ribbed plate are surfaces for biofilm attachment and growth, and any chamber formed by the recessed region 2 and the partition ribbed plate 4 are the regions for liquid temporary storage and biofilm growth control. This ensures that the carrier is provided with the maximum space for biofilm growth and liquid temporary storage within a fixed spatial range.

The biofilm can only grow within the chambers, and once it exceeds the maximum depth 3 of the recess, the biofilm exposed outside will be sheared and abraded by water or other carriers, thus limiting the continued growth of the biofilm. This ensures an effective process of oxygen transfer and mass transfer for the biofilm.

In the example, the present invention provides a suspended carrier for rapid fluidization and stable biofilm formation, whose structural composition includes wave-surface-shaped frameworks and partition ribbed plates. Two adjacent rows of wave-surface-shaped frameworks are in mirror symmetry with each other and are arranged in a staggered manner. Two adjacent rows of wave-surface-shaped frameworks are connected by the partition ribbed plate. A chamber enclosed by the wave-surface-shaped frameworks and the partition ribbed plate serves as the biofilm growth region.

The two adjacent rows of wave-surface-shaped frameworks in the suspended carrier of the present invention is in mirror symmetry with each other and are arranged in a staggered manner, which improves the stability of the overall structure of the suspended carrier. The two adjacent rows of wave-surface-shaped frameworks are connected by a partition ribbed plate arranged on the left and right sides of the wave-surface-shaped framework along the width direction. The partition ribbed plate separates the internal channels of the wave-surface-shaped framework so as to form independent chambers, wherein the chambers are regions in which liquid is temporarily stored during the initial use of the carrier, and biofilm growth is controlled in later stages. Additionally, both sides of any wave-surface-shaped framework and partition ribbed plate are surfaces for biofilm attachment and growth. Therefore, the carrier is provided with the maximum space for biofilm growth and liquid temporary storage within a fixed spatial range. On one hand, during use, when the liquid temporary storage rate reaches a certain proportion of the recessed space, the density or specific gravity of the entire suspended carrier will approximate that of the fluidized liquid, thereby achieving rapid fluidization. On the other hand, since both sides of any wave-surface-shaped framework and partition ribbed plate in the suspended carrier of the present invention are surfaces for biofilm attachment and growth, which means that the carrier is provided with the maximum space for biofilm growth and liquid temporary storage within a fixed spatial range, the bacterial abundance of ammonia oxidizing bacteria (AOB) and nitrite oxidizing bacteria (NOB) are significantly increased, thereby enhancing the conversion load of ammonia nitrogen.

### Example 2

Example 2 of the present invention is illustrated by FIGS. 2 and 4, wherein FIG. 4 is a schematic diagram of a structure connecting the adjacent wave-surface-shaped frameworks through connection points in another example of the present invention.

With reference to FIG. 2, the wave-surface-shaped framework as shown in FIG. 2 includes multiple crest regions arranged at intervals and multiple trough regions arranged at intervals, wherein the crest regions and trough regions are alternately arranged. In other words, a trough region is arranged between two crest regions, and a crest region is arranged between two trough regions. Two adjacent crest regions and a trough region arranged between them form a recessed region 2, and two adjacent trough regions and a crest region arranged between them also form a recessed region 2. These recessed regions 2 are regions in which liquid is temporarily stored during the initial use of the carrier and biofilm growth is controlled in later stages. In one or more embodiments, the trough region is located at a centerline of a line connecting the left and right crest regions, and the crest region is located at a centerline of a line connecting the left and right trough regions.

Referring to FIG. 4, any two adjacent rows of frameworks in the example are connected by a contact point 7 of an adjacent framework to form a stable whole, in which a complete channel is formed along a direction of the width of framework wave surface 5.

Referring to FIG. 4, any two adjacent rows of wave-surface-shaped frameworks in FIG. 4 are in mirror symmetry with each other and are arranged in a staggered manner. In the embodiment, the crest regions of any two adjacent rows of wave-surface-shaped frameworks are arranged in a staggered manner, and the trough regions of any two adjacent rows of wave-surface-shaped frameworks are arranged in a staggered manner. In one or more embodiments, the crest regions of one wave-surface-shaped framework in any two adjacent rows of wave-surface-shaped frameworks are arranged opposite to the trough regions of the other wave-surface-shaped framework, and the trough regions of one wave-surface-shaped framework are arranged opposite to the crest regions of the other wave-surface-shaped framework. In one or more embodiments, a crest region of one wave-surface-shaped framework in any two adjacent rows of wave-surface-shaped frameworks is located at a centerline position of the line connecting the left and right crest regions of a trough region of the other wave-surface-shaped framework arranged opposite to the crest region. A trough region of one wave-surface-shaped framework in any two adjacent rows of wave-surface-shaped frameworks is also located at a centerline position of a line connecting the left and right trough regions of a crest region of the other wave-surface-shaped framework arranged opposite to the trough region.

Referring to FIG. 4, any two adjacent rows of frameworks in the example are connected by a contact point 7 of an adjacent framework. The contact point 7 of the framework is located at a midpoint position of a line connecting adjacent crest region and trough region in the same wave-surface-shaped framework.

Both sides of any wave-surface-shaped framework are surfaces for biofilm attachment and growth, and any recessed regions within the carrier are communicated. The communicated recessed regions 2 are regions for liquid temporary storage and biofilm growth control. The spacing function of the partition ribbed plate 4 is eliminated in the example, which further increases the space available for biofilm growth and liquid temporary storage.

### Example 3

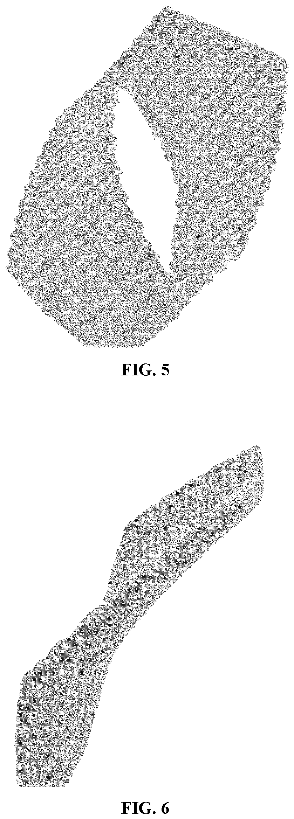

Example 3 of the present invention is illustrated by FIG. 5, wherein FIG. 5 is a schematic diagram of a non-planar hexagonal suspended carrier with notches.

In the example, one or more notches are added at any position on the hexagonal suspended carrier, so as to transform the overall contour shape of the suspended carrier into a non-planar hexagon with incisions.

In a biochemical reactor, fluidizing the non-planar hexagonal suspended carrier with incisions can effectively prevent the wall adhesion of the carriers and adhesion or stacking between the carriers.

### Example 4

Example 4 of the present invention is illustrated by FIG. 6, wherein FIG. 6 is a schematic diagram of a saddle-shaped suspended carrier.

In the example, the overall contour shape of the suspended carrier is saddle-shaped.

Fluidizing the saddle-shaped suspended carrier in a biochemical reactor can reduce the energy consumption in aeration or flow pushing and effectively prevent the phenomenon of the wall adhesion of the carriers.

The suspended carriers shown in the above examples have differences in functional configuration, which is mainly selected for different application scenarios and practical needs. The commonality is that the suspended carriers in all examples are provided with regions for liquid temporary storage and biofilm growth control, and all suspended carriers fulfill the function of controlling biofilm growth and achieving rapid fluidization during the initial addition stage. Based on the descriptions of the above examples, further explanations, effect verification, and result analysis of the examples are provided below.

The suspended carrier can be made from one or more organic polymer materials, inorganic materials, organic-inorganic composite materials, and their modified materials, through continuous extrusion, injection molding, or foaming.

In one or more embodiments, the structure of the wave-surface-shaped framework includes one or a combination of more of pure sinusoidal waves, sinusoidal waves, square waves, triangular waves, half waves, trapezoidal waves, or honeycomb waves.

The thickness of the suspended carrier of Example 1 was preferably in the range of 0.5-6.5 mm. In Example 1, the overall thickness of the suspended carrier was manufactured as 0.8 mm, 2.0 mm, 4.0 mm, and 6.0 mm, respectively, for performance testing.

The thickness of the wave surface of the wave-surface-shaped framework was preferably in the range of 0.1-2.5 mm. Correspondingly, the thickness of the wave surface of the framework of the suspended carriers with different overall thicknesses in Example 1 was respectively manufactured as 0.1 mm, 0.5 mm, 1.0 mm, and 2.0 mm for performance testing.

The thickness of the partition ribbed plate was preferably in the range of 0-0.8 mm. Correspondingly, the thickness of the partition ribbed plate of the suspended carriers with different overall thicknesses in Example 1 were respectively manufactured as 0.05 mm, 0.3 mm, 0.5 mm, and 0.6 mm for performance testing.

The width of the wave surface of the wave-surface-shaped framework was preferably in the range of 0.5-2.0 mm. Correspondingly, the width of the wave surface of the framework of the suspended carriers with different overall thicknesses in Example 1 was manufactured as 1.0 mm for performance testing.

The maximum depth of the recess was preferably in the range of 0.5-4.0 mm. Correspondingly, the maximum depth of the recess of the suspended carrier with different overall thicknesses in Example 1 was respectively manufactured as 0.5 mm, 1.5 mm, 3.0 mm, and 4.0 mm for performance testing.

The ratio of the maximum depth of the recess to the maximum opening width of the recess was preferably in the range of 2: 1-1:2. Correspondingly, the ratio of the suspended carrier with different overall thicknesses in Example 1 was manufactured as 1: 1 for performance testing.

The thickness of the suspended carrier of Example 2 was preferably in the range of 0.5-6.5 mm. In Example 2, the overall thickness of the suspended carrier was manufactured as 0.8 mm, 2.0 mm, 4.0 mm, and 6.0 mm, respectively, for performance testing.

The thickness of the wave surface of the wave-surface-shaped framework was preferably in the range of 0.1-2.5 mm. Correspondingly, the thickness of the wave surface of the wave-surface-shaped framework of the suspended carriers with different overall thicknesses in Example 2 was respectively manufactured as 0.10 mm, 0.5 mm, 1.0 mm, and 2.0 mm for performance testing.

Correspondingly, the partition ribbed plates of the suspended carrier with different overall thicknesses in Example 2 were all manufactured as 0 mm for performance testing.

The width of the wave surface of the wave-surface-shaped framework was preferably in the range of 0.5-2.0 mm. Correspondingly, the width of the wave surface of the wave-surface-shaped framework of the suspended carriers with different overall thicknesses in Example 2 was manufactured as 1.0 mm for performance testing.

The maximum depth of the recess was preferably in the range of 0.5-4.0 mm. Correspondingly, the maximum depth of the recess of the suspended carrier with different overall thicknesses in Example 2 was respectively manufactured as 0.5 mm, 1.5 mm, 3.0 mm, and 4.0 mm for performance testing.

The ratio of the maximum depth of the recess to the maximum opening width of the recess was preferably in the range of 2: 1-1:2. Correspondingly, the ratio of the suspended carrier with different overall thicknesses in Example 2 was manufactured as 1: 1 for performance testing.

The thickness of the suspended carrier of Example 3 was preferably in the range of 0.5-6.5 mm. In Example 3, the overall thickness of the suspended carrier was manufactured as 0.8 mm, 2.0 mm, 4.0 mm, and 6.0 mm, respectively, for performance testing.

The thickness of the wave surface of the wave-surface-shaped framework was preferably in the range of 0.1-2.5 mm. Correspondingly, the thickness of the wave surface of the wave-surface-shaped framework of the suspended carriers with different overall thicknesses in Example 3 was respectively manufactured as 0.10 mm, 0.5 mm, 1.0 mm, and 2.0 mm for performance testing.

The thickness of the partition ribbed plate was preferably in the range of 0-0.8 mm. Correspondingly, the thickness of the partition ribbed plate of the suspended carriers with different overall thicknesses in Example 3 were respectively manufactured as 0.05 mm, 0.3 mm, 0.5 mm, and 0.6 mm for performance testing.

The width of the wave surface of the wave-surface-shaped framework was preferably in the range of 0.5-2.0 mm. Correspondingly, the width of the wave surface of the wave-surface-shaped framework of the suspended carriers with different overall thicknesses in Example 3 was manufactured as 1.0 mm for performance testing.

The maximum depth of the recess was preferably in the range of 0.5-4.0 mm. Correspondingly, the maximum depth of the recess of the suspended carrier with different overall thicknesses in Example 3 was respectively manufactured as 0.5 mm, 1.5 mm, 3.0 mm, and 4.0 mm for performance testing.

The ratio of the maximum depth of the recess to the maximum opening width of the recess was preferably in the range of 2: 1-1:2. Correspondingly, the ratio of the suspended carrier with different overall thicknesses in Example 3 was manufactured as 1: 1 for performance testing.

The thickness of the suspended carrier of Example 4 was preferably in the range of 0.5-6.5 mm. In Example 4, the overall thickness of the suspended carrier was manufactured as 0.8 mm, 2.0 mm, 4.0 mm, and 6.0 mm, respectively, for performance testing.

The thickness of the wave surface of the wave-surface-shaped framework was preferably in the range of 0.1-2.5 mm. Correspondingly, the thickness of the wave surface of the wave-surface-shaped framework of the suspended carriers with different overall thicknesses in Example 4 was respectively manufactured as 0.10 mm, 0.5 mm, 1.0 mm, and 2.0 mm for performance testing.

The thickness of the partition ribbed plate was preferably in the range of 0-0.8 mm. Correspondingly, the thickness of the partition ribbed plate of the suspended carriers with different overall thicknesses in Example 4 were respectively manufactured as 0.05 mm, 0.3 mm, 0.5 mm, and 0.6 mm for performance testing.

The width of the wave surface of the wave-surface-shaped framework was preferably in the range of 0.5-2.0 mm. Correspondingly, the width of the wave surface of the wave-surface-shaped framework of the suspended carriers with different overall thicknesses in Example 4 was manufactured as 1.0 mm for performance testing.

The maximum depth of the recess was preferably in the range of 0.5-4.0 mm. Correspondingly, the maximum depth of the recess of the suspended carrier with different overall thicknesses in Example 4 was respectively manufactured as 0.5 mm, 1.5 mm, 3.0 mm, and 4.0 mm for performance testing.

The ratio of the maximum depth of the recess to the maximum opening width of the recess was preferably in the range of 2: 1-1:2. Correspondingly, the ratio of the suspended carrier with different overall thicknesses in Example 4 was manufactured as 1: 1 for performance testing.

Aerobic tank sludge from a municipal sewage treatment plant was used, and a phased addition strategy was adopted. The fluidization effect of the suspended carriers manufactured according to Examples 1-4 was tested, and the results are shown in Table 1.

**Table 1**

| Example | overall filler thickness (mm) | stage 1 | | stage 2 | | stage 3 | | total | |
|---|---|---|---|---|---|---|---|---|---|
| | | dosing tank capacity (%) | fluidization time (hours) | dosing tank capacity (%) | fluidization time (hours) | dosing tank capacity (%) | fluidization time (hours) | total dosing tank capacity (%) | total time (hours) |
| **1** | 0.8 | 15 | 0.6 | 15 | 1.9 | 20 | 3.6 | 50 | 6.1 |
| | 2.0 | 10 | 0.9 | 20 | 2.4 | 20 | 4.8 | 50 | 8.1 |
| | 4.0 | 10 | 3.8 | 15 | 3.3 | 25 | 7.3 | 50 | 14.4 |
| | 6.0 | 20 | 10.5 | 15 | 5.1 | 15 | 4.5 | 50 | 20.1 |
| **2** | 0.8 | 15 | 0.9 | 15 | 2.7 | 20 | 4.8 | 50 | 8.4 |
| | 2.0 | 10 | 1.2 | 20 | 3.6 | 20 | 4.7 | 50 | 9.5 |
| | 4.0 | 10 | 5.6 | 15 | 5.3 | 25 | 9,4 | 50 | 20.3 |
| | 6.0 | 20 | 12.2 | 15 | 6.4 | 15 | 4.9 | 50 | 23.5 |
| **3** | 0.8 | 15 | 0.6 | 15 | 2.3 | 20 | 3.1 | 50 | 6.0 |
| | 2.0 | 10 | 1.4 | 20 | 2.7 | 20 | 3.8 | 50 | 7.9 |
| | 4.0 | 10 | 3.2 | 15 | 3.5 | 25 | 7.1 | 50 | 13.8 |
| | 6.0 | 20 | 9.8 | 15 | 5.4 | 15 | 4.1 | 50 | 19.3 |
| **4** | 0.8 | 15 | 0.7 | 15 | 2.1 | 20 | 3.7 | 50 | 6.5 |
| | 2.0 | 10 | 1.3 | 20 | 2.8 | 20 | 4.5 | 50 | 8.6 |
| | 4.0 | 10 | 4.1 | 15 | 5.2 | 25 | 7.8 | 50 | 17.1 |
| | 6.0 | 20 | 11.7 | 15 | 5.3 | 15 | 4.8 | 50 | 21.8 |

As shown in Table 1, the complete fluidization time of the suspended carriers with different thicknesses in different examples varies and is related to the addition strategy. However, all examples of the present invention have the function of accomplishing rapid fluidization, and all examples can achieve carrier fluidization with more than 50% of the reactor filling rate within 24 hours. Compared with traditional commercially available rigid suspended carriers, wherein the carriers require 7-15 days or even longer for complete fluidization, the present invention has obvious advantages. The rapid fluidization of the suspended carrier provides more opportunities for the attachment and biofilm formation of microorganisms in the system start-up stage, which will shorten the start-up time of the reactor.

By using the MBBR reactor, continuous ammonia nitrogen removal tests were conducted on the manufactured suspended carriers in Examples 1-4. As the substrate loading fluctuates during the operation (ammonia nitrogen concentration ≥ 50 mg/L, HRT ≤ 6 h), the ammonia nitrogen removal rates are all above 95%. The maximum thickness of the biofilm is strictly controlled by the maximum depth of the recess formed by the wave-surface-shaped framework, which avoids the occurrence of uncontrolled biofilm growth due to substrate loading impacts, thus ensuring the effective activity of the biofilm.

The main limitations of all currently available commercial MBBR suspended carriers are reflected in the slow fluidization at start-up stage and inability to control biofilm growth within an effective range. For biofilms, the thickness of the film layer, which exerts the active effect, is much smaller than the results of the current commercially available MBBR suspended carrier design. Commercially available rigid suspended carriers assume that biofilms only grow in a single layer on the protected inner surface they are designed for. In reality, with substrate loading impacts, biofilms will overgrow, which leads to blockage of internal channels. At this point, the microorganisms inside form an anaerobic zone or are not reactive, and the functional film will only be the surface layer exposed to the liquid environment. Thus, the effective film area is greatly reduced. The efficiency of the traditional suspended carriers is entirely dependent on the free growth of the biofilm, and the stability of actual operation cannot be effectively guaranteed.

The MBBR suspended carrier of the present invention controls the maximum thickness of biofilm growth. Even under any substrate loading impact, when the biofilm fully covers the chamber enclosed by the wave-surface-shaped framework and partition ribbed plate or the recessed region of the wave-surface-shaped framework, the film layer thickness of the biofilm is still the effective thickness for functioning. Therefore, the maximum depth of the recess must be strictly controlled within an effective range. Thicker film layers will transform into dead zones of traditional MBBR suspended carriers, which significantly reduces the performance and stability of the carrier.

The preferable range for the maximum depth of the recess depends on the specific process application scenario. When applied to multi-stage AO-MBBR processes, different AO stages have varying metabolic functions for nitrogen. For AO stages mainly responsible for nitrification with low denitrification requirements, a recess depth of less than 0.5mm is more effective, which is related to oxygen transfer depth control. However, when the maximum depth of the recess is less than 0.05mm, the biomass that can be enriched in the recess is extremely limited and is unable to support and form a relatively complete nitrogen metabolism cycle. Similarly, when applied to sludge-film mixed processes, priority is given to the enrichment of activated sludge to achieve higher sludge loads. In this case, the maximum depth of the recess should be greater than 1.0mm. Therefore, the effective enrichment of functional microorganisms under the corresponding biochemical process is achieved.

The significant structural features of the present invention include the wave-surface-shaped framework, the depth of the recess, and their opening sizes. This provides a structural foundation for the dynamic replacement of biofilm under different substrate loading impacts and also provides the structural foundation for the control of liquid temporary storage rate. The structure design of the wave-surface-shaped framework is more conducive to hydraulic shear control, thus maintaining high biofilm activity under any substrate loading impact. It should be emphasized that the effectiveness of biofilm dynamic replacement depends on a ratio of the maximum depth of the recess to the maximum opening width of the recess. The ratio needs to be within the range of 5:1 to 1:10, most preferably range of 2:1 to 1:2, to achieve effective biofilm dynamic replacement.

Compared to known MBBR suspended carrier technology, the characteristics and advantages of the present invention are that a suspended carrier for rapid fluidization and stable biofilm formation is provided in the present invention. The suspended carrier can significantly shorten the fluidization time during the initial addition, laying a good foundation for the quick start of the reactor. Simultaneously, the suspended carrier can control biofilm growth, and prevent or mitigate the problem of poor system stability caused by various substrate loading impacts during actual operation. This offers an advantageous solution for the application of MBBR processes and other biofilm processes, which provides broad application value.

The present invention has been specifically described in the above embodiments but is not limited to the specific forms described above. The scope of the present invention is defined by the claims. In addition to the specific embodiments described above, other embodiments may be within the scope of the claims. Improvements and innovations based on the present invention shall be included in the scope of protection determined by the claims of the present invention.

### Industrial Practicality

In addressing the problems of prolonged fluidization time in the start-up stage and uncontrolled biofilm growth during the operation of the known MBBR suspended carriers, the present invention develops a suspended carrier for rapid fluidization and stable biofilm formation. The suspended carrier can achieve carrier fluidization with more than 50% of the reactor filling rate within 24 hours, whereas traditional MBBR suspended carriers typically require 7-15 days or even longer. In response to different substrate loading impacts, the growth thickness of the biofilm of the suspended carrier in the present invention is controlled within an effective range, so as to maintain the biofilm activity. The results of continuously removing ammonia nitrogen show that, after varying stages of substrate loading impacts, the removal rate of ammonia nitrogen remains stable at over 95%, whereas traditional carriers often experience clogging, which leads to a significant decline in the conversion load of ammonia nitrogen. This ensures the operational stability of the biochemical system.

## Claims

1. A suspended carrier, **characterized in that** a structural composition of the suspended carrier comprises wave-surface-shaped frameworks, and two adjacent rows of wave-surface-shaped frameworks are in mirror symmetry with each other and are arranged in a staggered manner.

2. The suspended carrier according to claim 1, wherein the two adjacent rows of frameworks are connected by contact points (7) of adjacent wave-surface-shaped frameworks, and a recessed region of a wave surface serves as a biofilm growth region.

3. The suspended carrier according to claim 1, wherein the structural composition of the suspended carrier further comprises a partition ribbed plate (4), wherein the two adjacent rows of wave-surface-shaped frameworks are connected by the partition ribbed plate (4), and a chamber enclosed by a recess of a wave surface and the partition ribbed plate (4) serves as a biofilm growth region.

4. The suspended carrier according to claim 1, wherein the structural composition of the suspended carrier further comprises a partition ribbed plate (4); along a width direction, left and right sides of the wave-surface-shaped framework are provided with the partition ribbed plate (4), respectively; the two adjacent rows of wave-surface-shaped frameworks are connected by the partition ribbed plate (4); and a chamber enclosed by a recess of the wave-surface-shaped framework and the partition ribbed plate (4) serves as a biofilm growth region.

5. The suspended carrier according to claim 1, wherein the wave-surface-shaped framework comprises multiple crest regions arranged at intervals and multiple trough regions arranged at intervals, and the crest regions and the trough regions are alternately arranged,
preferably, two adjacent crest regions and a trough region arranged therebetween form a recessed region, and two adjacent trough regions and a crest region arranged therebetween form a recessed region;
the trough region is located at a centerline of a line connecting left and right crest regions, and the crest region is located at a centerline of a line connecting left and right trough regions; and
the crest regions of any two adjacent rows of wave-surface-shaped frameworks are arranged in a staggered manner, and the trough regions of any two adjacent rows of wave-surface-shaped frameworks are arranged in a staggered manner.

6. The suspended carrier according to claim 5, wherein the crest regions of one wave-surface-shaped framework in any two adjacent rows of wave-surface-shaped frameworks are arranged opposite to the trough regions of another wave-surface-shaped framework, and the trough regions of one wave-surface-shaped framework are arranged opposite to the crest regions of another wave-surface-shaped framework,
preferably, a crest region of one wave-surface-shaped framework in any two adjacent rows of wave-surface-shaped frameworks is located at a centerline position of a line connecting left and right crest regions of a trough regions of the other wave-surface-shaped framework arranged opposite to the crest region; and a trough region of one wave-surface-shaped framework in any two adjacent rows of wave-surface-shaped frameworks is located at a centerline position of a line connecting left and right trough regions of a crest region of the other wave-surface-shaped framework arranged opposite to the trough region.

7. The suspended carrier according to claim 2, wherein the contact point (7) of the framework is located at an arbitrary position of a line connecting adjacent crest region and trough region in the same wave-surface-shaped framework.

8. The suspended carrier according to claim 1, wherein a structure of the wave-surface-shaped framework of the suspended carrier comprises one or a combination of more of pure sinusoidal waves, sinusoidal waves, square waves, triangular waves, half waves, trapezoidal waves, or honeycomb waves.

9. The suspended carrier according to claim 1, wherein a thickness (8) of the suspended carrier is 0.1-7.0 mm.

10. The suspended carrier according to claim 3, wherein a thickness of the partition ribbed plate (4) is ≤ 1.0 mm.

11. The suspended carrier according to claim 1, wherein a thickness of the wave surface of the wave-surface-shaped framework is 0.05-2.0 mm; and
a width (5) of the wave surface of the wave-surface-shaped framework is 0.05-50 mm.

12. The suspended carrier according to claim 2, wherein a maximum depth (3) of the recessed region (2) is 0.05-5.0 mm.

13. The suspended carrier according to claim 3, wherein a maximum depth (3) of the recessed region (2) is 0.05-5.0 mm.

14. The suspended carrier according to claim 1, wherein a ratio of a maximum depth (3) to a maximum opening width (6) of the recessed region (2) is 5:1 to 1:10,
preferably, the ratio of the maximum depth (3) to the maximum opening width (6) of the recessed region (2) is 3:1 to 1:5.

15. The suspended carrier according to claim 1, wherein a shape of the suspended carrier comprises one or more of a saddle shape, a C shape, an S shape, a hexagonal shape, a circular shape, and a rectangular shape; or a non-planar shape with notches.
